# EUROPEAN PATENT APPLICATION

(11) **EP 3 076 697 A1**
(43) Date of publication of application: **05.10.2016**
(21) Application number: 15305506.6
(22) Date of filing: 03.04.2015
(51) Int. Cl.: H04W 12/12, H04M 1/66, G06F 21/88

(54) **APPARATUS AND METHOD FOR PROVIDING A SECURITY MECHANISM ON A MOBILE DEVICE**

(71) Applicant: Thomson Licensing, 92130 Issy-les-Moulineaux (FR)
(72) Inventor: Kerber, Thierry, 92443 Issy-Les-Moulineaux (FR)
(74) Representative: Huchet, Anne

(57) **Abstract**

An apparatus and method for providing a security mechanism on a mobile device are described. The method (700) includes determining (730) a distance from an initial location for a device, the distance from the initial location determined using a sensor included in the device, determining (740) if the distance from the initial location for the device exceeds a first threshold value for the distance, and initiating (750) a first alternate operating condition for the device if the distance has been exceeded. The apparatus (200) includes a sensor (280) that determines a distance from an initial location and a controller (210) that receives the distance from the sensor and determines if the distance exceeds a first threshold value for the distance, the controller (210) further initiating a first alternate operating condition if the first threshold value for the distance has been exceeded. The first alternate operating condition includes at least one security measure used to prevent unauthorized use of the apparatus.

## Description

### TECHNICAL FIELD OF THE INVENTION

The present disclosure generally relates to operations associated with a mobile device. More particularly, the present disclosure relates to an apparatus and method for providing a security mechanism on a mobile device, such as a cellular phone or tablet, in order to prevent theft or unauthorized relocation of the device.

### BACKGROUND OF THE INVENTION

This section is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

Most people today always keep mobile devices with them. These mobile devices may include, but are not limited to, cellular phones, smartphones, personal digital assistants, tablets, portable computers, and smartglasses. Mobile devices have become an indispensable communication tool for calling, being joined, interfacing, or otherwise staying connected with others at any moment.

However, in some circumstances, it may be necessary to leave a mobile device in some public place for a while. For example, the device may be left unattended, but nearby, while practicing sport, dancing or participating in a show. In addition, given the potential health risks associated with being exposed systematically to radio frequencies emitted by a cellular or wireless apparatus, some people may wish not to keep the device always against their body and instead to keep it at some distance (e.g., one meter distance or less) whenever possible.

An issue with leaving the mobile device unattended or at some distance from the owner is that the opportunity for the device to be stolen or otherwise relocated and/or used in an unauthorized manner becomes greater. Thefts and losses have substantially increased over the past few years to the point that a high level of risk exists in simply diverting one's attention from one's device for a few minutes. The risk is all the more critical since devices increasingly contain a number of personal and confidential pieces of information and the contact information, such as phone numbers, may be exploited for securing banking or financial transactions.

Multiple anti-theft solutions exist for attempting to address the theft or other unauthorized relocation problem. These solutions generally rely on either local access deterrence or remote deactivations, typically triggered by the device owner, and may combine both approaches.

For example, it is quite common that a mobile device includes a mechanism for automatically activating a safety locking when the device remains unused during a predetermined duration. Then, making use of the device again requires an appropriate password to be entered for authentication. Failing to provide the password after several consecutive attempts often leads to preventing further access to the phone and/or deactivating an authorization element of the device (e.g., the subscriber identity module (SIM) or universal SIM (USIM) card).

Though such a solution looks relatively reassuring, the solution is often not used in practice notably because the additional burden of entering a password or code for each use is perceived as cumbersome by many users. In particular, mobile devices are intended to be readily available, either for calling or being called, consulting, receiving, and responding to emails or small messages using short message service (SMS), multimedia message service (MMS), and the like. The high number of times the device may be accessed during the day makes the corresponding repeated entry of passwords or codes inconvenient. It is also possible to switch off the device when leaving the device in a public place or to manually trigger a security password locking mechanism. However, the device owners often expect that the device will remain readily available. As a result, the device is frequently kept on without having a security password locking mechanism activated.

Further, even if a password code is used to protect or prevent access to the device, the access protection does not prevent the device from being swiftly and/or discretely taken. Once taken, skilled thieves or other people may make use of the devices or components in the devices or even succeed in retrieving the internal data containing personal information.

More advanced access security mechanisms may use biometric techniques, such as fingerprint, eye pupil, or face recognition, or voice authentication. The biometric techniques may be used in place of, or in addition to, password entry. While these mechanisms avoid the requirement of password or code entry, the mechanisms are relatively costly to implement. Also, as previously described, these mechanisms are no better at preventing the theft or other unauthorized relocation of the device for exploitation in some way.

Remote deactivation measures may also be included with the device or with a service and initiated by an owner when a mobile device is lost or stolen in order to prevent fraudulent use of the device. The actions include, but are not limited to, deactivating the SIM or USIM card, remotely preventing powering on the device, and destroying internally stored data. However, remote deactivation mechanisms are typically implemented through awareness of the device owner. As a result, a undesirable time delay exists before safety actions can be practically put in place. During this period of time delay, crucial data may be stolen or disseminated.

In some more remote deactivation solutions, deactivation may initiate automatically. For example, in some solutions that are particularly relevant to professional devices, the devices are adapted to report periodically to a central server. A device that fails to report is considered stolen or lost, and security actions are executed, such as remotely deleting data on the device. Again, the level of safety based on this implementation is not highest, since the part of the period remaining before the next report to the central server offers time range opportunities to thieves. An additional drawback of this technology is the risk of deleting data as a result of the mobile devices being turned off for too long of a time or because communication to the network has been lost.

The need for reacting locally and swiftly to a theft or loss of a mobile device is desirable. In this respect, one possible solution has been proposed in documents US-2007/0294529-A1 to Avaya Technology LLC and EP-2,458,524 to Deutsche Telekom AG and Technische Universtität Berlin. The solution relies on the use of an acceleration sensing unit in the device with which the gait of a mobile device owner is automatically analyzed, recorded, and then considered for authentication. If the gait identified by the device appears to be sufficiently distinct from the gait identified with the owner, the device may automatically react as being lost or stolen and implement some form of security measures.

The gait identification technology enables local risk assessment, provides the assessment without the need of further external interaction, and does not require cumbersome and/or repeated user actions. However, while the gait identification technology may be directed at these issues, gait identification technology is also limited to the quality of internal processing used with the gait identification. As a result, characterization may be subject to some significant error margin for such complex operations. The more precise and sophisticated the characterization is, the more memory and processing resources are needed. In addition, some time is still required before the gait of an unauthorized user can be identified as such, which leaves enough time for him/her to be far away from the theft place before any appropriate security actions are taken. Lastly, it can be expected that the security mechanisms may be mistakenly triggered as a result of the reference identified gait of the device owner or an authorized user being disturbed or distorted (e.g., by the owner having an unusual gait or the device being lent to a family member or friend).

As a result, there is a need for an improved security mechanism for a mobile device that is both automatically and reliably operational with respect to the location of the mobile device.

### SUMMARY

According to an aspect of the present disclosure, a method is described. The method includes determining a distance from an initial location for a device, the distance from the initial location determined using a sensor included in the device, determining if the distance from the initial location for the device exceeds a first threshold value for the distance, and initiating a first alternate operating condition for the device if it is determined that the first threshold value for the distance has been exceeded, the first alternate operating condition including at least one security measure used to prevent unauthorized use of the mobile device.

According to another aspect of the present disclosure, an apparatus is described. The apparatus includes a sensor that determines a distance from an initial location for the apparatus and a controller that receives the distance from the sensor and determines if the distance from the initial location for the device exceeds a first threshold value for the distance, the controller further initiating a first alternate operating condition for the apparatus if it is determined that the first threshold value for the distance has been exceeded, the first alternate operating condition including at least one security measure used to prevent unauthorized use of the apparatus.

The above presents a simplified summary of the subject matter in order to provide a basic understanding of some aspects of subject matter embodiments. This summary is not an extensive overview of the subject matter. It is not intended to identify key/critical elements of the embodiments or to delineate the scope of the subject matter. Its sole purpose is to present some concepts of the subject matter in a simplified form as a prelude to the more detailed description that is presented later.

### BRIEF DESCRIPTION OF THE DRAWINGS

These, and other aspects, features and advantages of the present disclosure will be described or become apparent from the following detailed description of the preferred embodiments, which is to be read in connection with the accompanying drawings.
FIG. 1 illustrates a block diagram of an exemplary system used in conjunction with the principles of the present disclosure;
FIG. 2 illustrates a functional block diagram of an exemplary mobile device according to principles of the present disclosure;
FIG. 3 illustrates a drawing of an exemplary menu display in a user interface on a mobile device according to principles of the present disclosure;
FIG. 4 illustrates a drawing of an exemplary display screen used in a mobile device according to principles of the present disclosure;
FIG. 5 illustrates a diagram showing an exemplary distance map including characteristics associated with a current location for a mobile device according to principle of the present disclosure;
FIG.s 6A and 6B illustrate diagrams showing distance maps including operational mechanisms based on movement of a mobile device according to principles of the present disclosure;
FIG. 7 illustrates a flow chart of an exemplary process for providing a security mechanism for a mobile device according to principles of the present disclosure; and
FIG. 8 illustrates a flow chart of another exemplary process for providing a security mechanism for a mobile device according to principles of the present disclosure.

It should be understood that the drawings are for purposes of illustrating the concepts of the disclosure and is not necessarily the only possible configuration for illustrating the disclosure.

### DETAILED DESCRIPTION OF PREFERRED EMBODIMENTS

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

The present disclosure addresses problems associated with preventing loss or theft of a mobile device. The embodiments describe security mechanisms that provide improved reliability and further initiate automatically when activated by the user before the theft or loss occurs. Principles of the present disclosure may be implemented with limited additional memory and processing resources.

One or more embodiments rely on an inertial sensing unit (e.g., an accelerometer or gyroscopic sensor) that is used to identify and assess movements of the mobile device. Sensing units are already present in a number of available mobile devices. The anti-theft security mechanism is activated by the user when the phone is left in a given place in which it is expected to stay. When the sensing unit detects that the mobile device has been moved beyond a predetermined distance from the initial place, security actions are automatically taken for preventing fraudulent actions and/or unauthorized use of the mobile device. In other embodiments, the security mechanism may be triggered using external interfaces, including device location technologies or services.

In some embodiments, if the mobile device is brought back to within a predetermined safe distance in relation to the initial place within a defined period of time at least some of the security actions may be interrupted or terminated.

In some embodiments, if a defined time has passed before the mobile device has not been brought back within the identified safe distance, a second level of security actions may be initiated or launched in addition to, or in place of, the first level security measures. These embodiments implement a two-step security mechanism, with the second level taken only when the likelihood of a theft or unauthorized use is confirmed. The second level of security actions may also be triggered if the mobile device is moved beyond a further identified distance from the initial phone position instead of after a defined time has passed.

In some embodiments, the first level of security actions may include an audible alarm and/or an automatic safety locking of the phone requiring the entry of a password for later phone use. The second level of security actions may include a deletion of at least part of the data and/or an automatic transmission of a warning message over a communication channel from the device (e.g., to a central server).

In the embodiments described herein, certain elements shown in the figures are well known and will not be described in further detail. It should also be noted that the present embodiments may be implemented using conventional programming techniques, which, as such, will not be described herein.

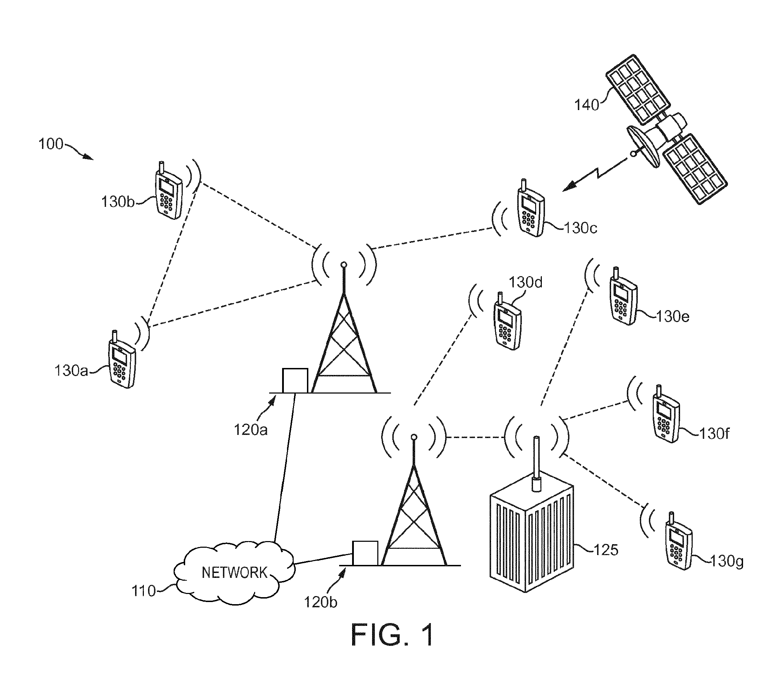

Turning to FIG. 1, a block diagram of an exemplary system 100 according to principles of the present disclosure is shown. System 100 may be operated as a cellular phone and data network, a wireless data network, a combination of both, or any other similar local or regional communication network. As an example, system 100 may operate according to one of the various cellular standards including, but not limited to, third generation technologies Universal Mobile Telecommunications System (UMTS), Code Division Multiple Access - Evolution Data Optimized (CDMA2000 1 x EV-DO), CDMA2000 1 x EV-DV (Evolution Data / Voice), CDMA2000 2x/3x (Multi-carrier), or fourth generation Long-Term Evolution (LTE). System 100 may also operate according to one of the various wireless data communication standards including, but not limited to, Wireless Local Area Networks / Wireless Personal Area Network (WLAN/WPAN), Wireless Fidelity (WiFi), Wireless Metropolitan Area Networks (WMAN), Worldwide Interoperability for Microwave Access (WiMAX), or Bluetooth technologies.

A provider network 110 is physically interfaced with base stations 120a, b. Each of the base stations 120a, b typically contain circuitry for interfacing between network 110 and other devices used in the system. Each of the base stations 120a, b may also include equipment placed within a building and may also include an antenna placed on top of or near the building. Base station 120a, b provides a wireless or radio interface to other devices used in the system as well as a communication interface between those devices and the Internet.

Each of the base stations 120a, b communicates through the wireless or radio interface to one or more devices 130a-g within a region of geographic vicinity of the base stations 120a, b. Devices 130a-g may be at fixed locations, such as houses or buildings, may be mobile, such as in cars, or with pedestrians. Device 130a-g, may include, but are not limited to, cellular phones, smartphones, personal digital assistants, tablets, portable computers, and smartglasses. In a preferred embodiment the regions of geographic vicinity between base stations 120a, b and devices 130a-g are segregated into cells based on boundaries governed by radio signal characteristics and terrain. Additionally one or more of the devices 130a-g, may be capable of communicating with base stations 120a, b and also with other devices 130a-g directly. For example, device 130a may be capable of communicating with both base station 120a as well as device 130b as shown.

Base stations 120a, b may also wirelessly interface with repeater devices, such as repeater 125. Repeater 125 may be in a fixed location, such as a building, and permits extension of coverage or range of the wireless signals from a base station (e.g., base station 120b). Repeater 125 further interfaces wirelessly with devices 130e-f and provides an interface with the base station 120b.

One or more of the devices 130a-g, may be capable of receiving a signal from satellite 140. Satellite 140 is used in conjunction with the global positioning system (GPS) and provides additional location and navigation capabilities to devices 130a-g.

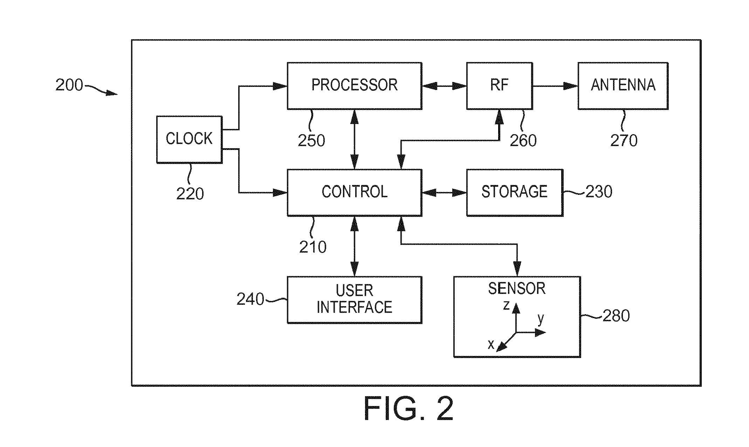

Turning to FIG. 2, a block diagram of an exemplary mobile device 200 according to aspects of the present disclosure is shown. Mobile device 200 operates in a manner similar to any one of devices 130a-g described in FIG. 1. For simplicity, certain elements necessary for complete operation of mobile device 200 will not be shown or described as they are well known to those skilled in the art.

A control unit 210 is connected to clock unit 220, processor 250, radio frequency (RF) unit 260, storage unit 230, user interface 240, and sensor 280. Clock unit 220 also connects to processor 250. Processor 250 also connects to RF unit 260. RF unit 260 connects to antenna 270.

Control unit 210 receives regular clock signals from clock unit 220. Clock unit 220 may be crystal controlled or use a similar stable internal clock source and may operate at a frequency appropriate for the type of electronic circuit technology in mobile device 200. In one embodiment, clock unit 220 operates at 100 Megahertz (MHz). Control unit 210 manages the operations within mobile device 200. Control unit 210 may be implemented in the form of integrated circuits and/or software, preferably taking advantage of a combination of both hardware and software capacities.

Storage unit 230 is provided for storing and retrieving information, under the control of the control unit 210. The information may include operational control code, data, user information, and temporary results. This storage space 230 may include one or several of the following storage elements including, but not limited to RAM, ROM, and Electrically-Erasable Programmable ROM (EEPROM) often called flash memory. The storage unit 230 may also take the form of an integrated memory or be a combination of such an integrated memory and a removable storage resource (e.g., a Secure Digital (SD) memory card).

A user interface 240 provides an interface mechanism for communications by and to a user interacting with mobile device 200. User interface 240 may include one or more of a physical or virtual keyboard, touchscreen or touch panel, a display screen, button panel, a sound recognition and emission system (e.g., a microphone and speaker), as well as any other interface elements as well known to those skilled in the art. The display screen used as part of user interface 240 may itself be of any type including, but not limited to, a Liquid-Crystal Display (LCD), an Organic Light-Emitting Diode (OLED) display or an Active Matrix OLED (AMOLED) display.

Signal processor 250 provides signal processing functions for mobile device 200, under the control of the control unit 210. The signal processing functions may include encoding/decoding, modulation/demodulation, digital to analog (D/A) and analog to digital (A/D) conversion capabilities. The signal processor 250 receives signals from, and provides signals to, RF unit 260, also under the control of the control unit 210. RF unit 260 provides signal filtering, amplification, and frequency conversion for signals in compliance with the communication protocol in a network (e.g., system 100 described in FIG. 1). These signals may include audio, video, and/or data signals for communication in the network to other devices (e.g., devices 130 a-g described in FIG.1) using antenna 270. Antenna 270 may include one antenna or may use more than one antenna, including an antenna array, for use with the network. Antenna 270 may also include an antenna for receiving satellite signals in conjunction with GPS.

It is important to note that processor unit 250, RF unit 260, and antenna 270 may be adapted for communication using cellular signals according to one or more of the standards, such as UMTS, CDMA2000 1x EV-DO, CDMA2000 1x EV-DV, CDMA2000 2x/3x, and LTE. Processor unit 250, RF unit 260, and antenna 270 may be additionally, or alternatively, be adapted for communication using wireless signal according to one or more standards, such as WLAN/WPAN - notably WiFi and Bluetooth, and WMAN - notably WiMAX.

Mobile device 200 also includes a sensor 240. Sensor 240 provides a sensor signal to control unit 210. Sensor 240 may include one or more sensor devices. In one embodiment, sensor 240 includes three accelerometers or acceleration sensors operating on three perpendicular axes x, y, and z. Sensor 240 is able to derive movements and displacements of mobile device 200, from acceleration monitored along the three axes. Other sensor arrangements, such as gyroscopic arrangement, may also be possible and be adapted for use with the principles of the present disclosure. Sensor 240 may also provide inputs for automatic screen rotation, simple navigation or pedometers, the latter being notably adapted for walkers and runners to be informed about travelled distances.

In operation, mobile device 200 may implement one or more security measures based on movement of a mobile device from an initial location using only information from sensor 280. By using information from sensor 280, any security measures may be triggered without relying on any external information. Control unit 210 may process the sensor information to determine movement of the mobile device. When the movement away from the initial location exceeds a first threshold distance, referred to as a trigger threshold, a first set of security measures are initiated. In some cases, if the movement away from the initial location further exceeds a second threshold distance, referred to as a threat threshold, a second set of security measures are initiated.

In the case that movement returns the mobile device towards the initial location such that the position no longer exceeds the second threshold distance, the second set of security measures are terminated. When movement returns the mobile device towards the initial location such that the position no longer exceeds the first threshold distance, now referred to a safety threshold, the first set of security measures are terminated.

Alternatively, mobile device 200 may implement one or more security measures based on movement of a mobile device from an initial location using information from sensor 280 and may include, in addition to, or instead of, GPS location information received through antenna 270 and RF unit 260. Control unit 210 may process the sensor information and GPS location information to determine movement of the mobile device. When the movement away from the initial location exceeds a first threshold distance, referred to as a trigger threshold, a first set of security measures are initiated. A timer mechanism, using clock unit 220 and control unit 210, is started as part of the first security measures. If mobile device 200 is not returned to a location that does not exceed a second threshold, referred to as a safety distance, within a specified time, as determined by control unit 210, then a second set of security measures are initiated. If the device is returned to a location with safety distance within the time period, then the first security measures may be terminated.

It should be appreciated by one skilled in the art that the blocks described in mobile device 200 have important interrelations, and some blocks may be combined and/or rearranged and still provide the same basic overall functionality. For example, processor 250 may be combined and further integrated along with some or all of the functions of controller 210 into a System on a Chip (SoC) that operates as the main controller for mobile device 200. Further, control of various functions may be distributed or allocated based on specific design applications and requirements. As an example, the signals from sensor 280 may be received by controller 210 and further provided to processor 250. The processing associated with determining a position of the mobile device may be performed by processor 250 with the results provided back to controller 210 for determining security measures.

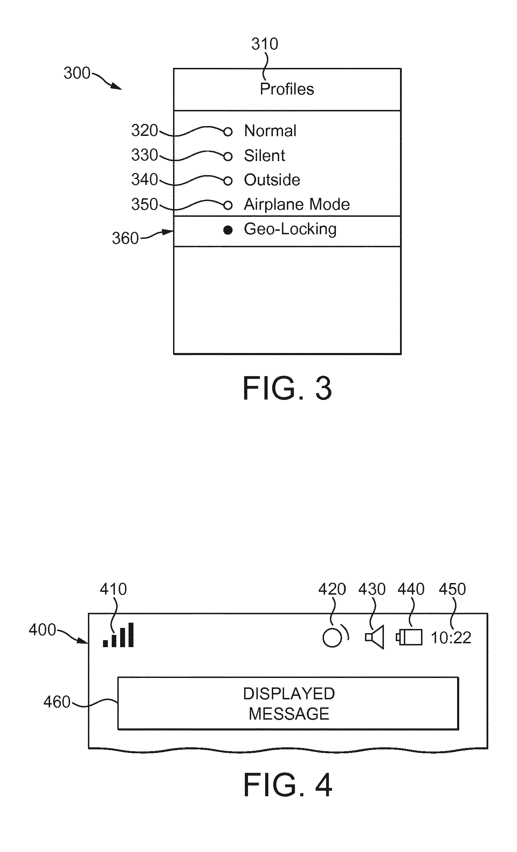

Turning now to FIG. 3, a diagram of an exemplary user interface 300 using a touch panel and display on a communication device according to aspects of the present disclosure is shown. User interface 300 may be included as part of a larger user interface, such as user interface 240 described in FIG. 2. User interface 300 may also be used in other mobile devices, such as mobile devices 130a-g described in FIG. 1. It is important to note that user interface 300 will be described here in relation to a touch panel or touch screen. User interface 300 may also be implemented using other elements, such as a button panel or even a voice selection mechanism, well known to those skilled in the art.

User interface 300 is arranged to enable a user to access a profiles menu 310 displayed on a display screen. Profiles menu 310 includes a set of selection entries labeled Normal 320, Silent 330, Outside 340 (e.g., highly amplified speaker sound output), Airplane 350, and Geo-Locking 360. A user may select one of the entries by navigating, using an onscreen cursor on the display or other touch screen navigation technique, to one of the entries and selecting the radio button next to the entry. The entries Normal 320, Silent 330, Outside 340, and Airplane 350 will not be described further here as their operation is well known to those skilled in the art.

The Geo-Locking entry 360 performs a special operational feature for geographic locking in the mobile device using aspects of the present disclosure. The geographic locking feature may be combined with one or more "sleep" modes normally present in the mobile device due to recognized inactivity in the mobile device. The one or more sleep modes may vary from device to device and may depend on a specific standard and/or implementation. It is to be understood that some devices may refer to a sleep mode as an "idle", "standby" or other similar mode.

In particular, with GPRS (General Packet Radio Service) used in cellular phones and the like, the mode called "standby" is triggered after a preset inactivity duration (typically 40 seconds), while the "idle" state corresponds to a detachment of the phone from the GPRS network or to an Anonymous Access Packet Data Protocol (AA PDP) context deactivation. Also, in compliance with the Universal Mobile Telecommunications System (UMTS) Radio Resource Control (RRC) protocol stack, a first inactivity timer controls transition from cellular Dedicated Channel (CELL_DCH) to cellular Forward Access Channel (CELL_FACH), a second timer controls transition from CELL_FACH to Cellular Paging Channel (CELL_PCH), and a third timer controls transition from CELL_PCH to idle, the CELL_DCH, CELL_FACH, CELL_PCH and idle modes having decreased power consumption.

In some embodiments, the geographic locking feature does not alter or disturb the power-saving mechanisms in the mobile device. Accordingly, the geographic locking feature is activated or deactivated independently of the sleep modes and can be notably operational in the active state of the mobile device. The corresponding implementation of geographic locking, referred to as the "On" profile or mode due to its capability of co-working with the on mode of the mobile device, is attractive as a result of its ease of use and simplified implementation. Preferably, the working mode of the mobile device at the point just before the activation of the geographic locking feature is established or maintained for the "On" profile or mode (e.g. Normal mode or Airplane mode in the mobile device).

In a particular implementation of the "On" profile or mode, when the mobile device is switched off, the geographic locking feature (e.g., when selecting entry 360) is automatically deactivated and/or removed from memory. Accordingly, when the mobile device is switched on again later, another mode may be operational. Preferably, the mobile device is configured for storing a parameter representative of the last mode used before selecting the Geo-Locking entry 360. That operational mode (e.g. Normal or Airplane) is activated when switching on the mobile device again.

In another particular implementation of the "On" profile or mode, the mobile device includes dedicated battery capabilities that are able to maintain the geographic locking feature functions (e.g., sensor 280 and controller 210 described in FIG. 2) in the mobile device even when switched off in other respects. Those resources consist advantageously in circuits fed by the usual phone battery. The geographic locking feature remains active until expressly switched off by the user. Preferably, a related warning remains visible even when the phone is switched off. Though more complex to implement than other implementations, maintaining the geographic locking feature even in the off mode strengthens the security level by notably defeating dishonest attempts by thieves to swiftly mitigate or disable the security safeguards as soon as attempts by unauthorized users or thieves to take the mobile device are made.

In another embodiment, referred to as the "Continuous Standby" profile or mode, the geographic locking feature is associated with a sleep state for the mobile device which is triggered and maintained by having the geographic locking feature activated. Sleep state may correspond to any or all of the sleep modes available in the mobile device and follows the same automatic selection mechanisms, possibly dynamic in time, as are well known to a person skilled in the art. For example, if a cellular phone is attached to a GPRS network and not in anonymous operation, the "standby" mode is triggered with the geographic locking. Also, if the phone is UMTS-interfaced as user equipment, the geographic locking feature includes switching to the CELL_FACH mode, and further the successive transitions to the CELL_PCH and idle modes in compliance with usual sleep state working. With respect to the "On" profile or mode, the "Continuous Standby" profile or mode offers reduced power consumption, while generally not affecting normal uses, insofar as it can be expected that the geographic locking feature be activated rather when the user is not handling the mobile device. Also, that solution reduces the risks for the user to forget the activation of the geographic locking feature during use.

In such an embodiment, the awakening of the mobile device from a sleep or standby state is obtained in a traditional way, such as pressing a key. Preferably, after the key is pressed, a message is displayed to the user mentioning the activation of the geographic locking and proposing to deactivate it. If the user chooses to keep the geographic locking, the phone turns back to the corresponding sleep state. Otherwise, the geographic locking feature is replaced by an active mode, preferably the one used just before the selection of the Geo-Locking entry 360 by the user (e.g. Outside mode in the mobile device). Failing any response by the user within a predetermined duration, the geographic locking feature is maintained and the mobile device is returned to a sleep state. The duration for returning to the sleep state corresponds preferably to the usual sleep state in case of user inactivity.

Mechanisms similar to the ones described above for switching off the mobile device in the "On" profile or mode may be advantageously adopted in "Continuous Standby" mode or profile as well.

In a variant implementation of the "'Continuous Standby" mode or profile, a specific sleep mode is automatically selected and maintained when selecting Geo-Locking entry 360, instead of following the usual sleep behavior of the phone. Preferably, when several power saving modes are provided, the specific sleep mode used with the geographic locking feature is the one corresponding to the highest activity level. The highest activity level is typically the level adopted or entered operational first, based on the initial inactivity timer (e.g., CELL_FACH for UMTS). As a result, first power-saving mode (i.e., highest activity level) is made integral with the geographic locking feature, selected in response to the user selecting entry Geo-Locking 360. This implementation may facilitate swifter mechanisms in reaction to movements of the mobile device and results in only slightly increased power consumption (due to maintaining a higher power consumption mode). The implementation may not be compatible with some device or cell phone standards as a result of the increased power consumption.

In a further embodiment, the geographic locking feature may utilize aspects and features in the mobile device based on an "Airplane" profile or mode (e.g., Airplane Mode 350). In "Airplane" mode, no communication may occur with certain networks (e.g., a cellular network). In that case, the activation of the geographic locking feature entails the "airplane" state of the mobile device. Geographic locking used in an "airplane" mode may make sense in certain situations, such as when the owner of the device leaves his/her mobile device and does not expect to receive messages while in this mode. As seen above, this does not cover situations in which the user remains close to the mobile device and expects to remain connected.

Mechanisms similar to the ones described above for switching off the mobile device may be advantageously adopted in "Airplane" mode or profile as well.

In all the above solutions, the user does not choose how the mobile device behaves in the Geo-Locking mode, since this is automatically set through predetermined manufacturer or software provider choices. Those simpler implementations are thus straightforward to the user, who just needs to select the Geo-Locking profile 360 for activation. On the other hand, those do not offer any flexibility in the related mobile device behavior.

In yet another embodiment, a plurality of modes or profiles, including those described above, may by contrast be presented in user interface 300. For example, the choice of the Geo-Locking entry 360 may further present an additional set of selection mode entries, or sub-profiles, to the user. Advantageously, a sub-menu (not shown) is presented to the user including the "On", "Continuous Standby" and "Airplane" options respectively described above in combination with the geographic locking capabilities. A default profile (e.g., the "On" solution) may be automatically selected or pre-selected. A further sub-menu item can be added, in which the mobile device is substantially turned off except for the present anti-theft implementation, referred to as the "Off' subprofile or mode.

Any password or biometric locking mechanism operating in one or more of the standby implementations (e.g., the "On" or "continuous standby" mode above) may not be necessarily triggered automatically together with the geographic locking feature when selecting Geo-Locking entry 360. Accordingly, users can keep the device close to them and consult messages and make or receive calls whenever desired without being compelled to enter the password every time the geographic locking feature is active. However, the password locking mechanism may be automatically triggered if the mobile device is moved beyond a preset distance.

It is important to note that in the "Off' mode or sub-profile, password locking may be automatically activated. As a result, the geographic locking feature maintains the usual off mode features or characteristics in the mobile device in which the user necessarily needs to enter the password for making the mobile device operational. The specific retention of the automatic password in the "Off' mode or sub-profile in the geographic locking feature is an important convenience for the user. In particular, when the mobile device is left unattended for some time, e.g. when kept together with common luggage or stored in an individual storage space in a public area, it may be preferable to set the "Off' mode or sub-profile (at least for sake of power saving, the phone not being exploited). As a result, the anti-theft and security mechanisms will remain active and will protect the mobile device against being fraudulently taken or stolen. In addition, the inherent password locking mechanism as part of turning on the mobile device covers other situations in which theft of the mobile device may lead to dishonest use of the phone without invoking the security mechanisms related to the geographic locking feature.

Additionally, a mobile device (e.g., mobile device 200 describe in FIG. 2) may include a password lock activation mechanism or other similar authentication mechanism (e.g., as part of the control in the control unit 210 in FIG. 2). A user may be able to make the entry of a password mandatory for any later use of the mobile device as part of the geographic locking feature, until selected otherwise. According to the present preferred embodiment, once the Geo-Locking profile 360 (or sub-profile) is selected, it is possible for the user to activate and deactivate the password or authentication functionality jointly with the geographic locking feature.

In some embodiments, if the password locking or other authentication (e.g., biometric) feature inherent in the mobile device is systematically activated (e.g., when the mobile device enters standby mode) the password setting may be maintained when selecting the Geo-Locking profile 360. According to a variant embodiment, the activation of the Geo-Locking profile 360 (or sub-profile) automatically entails the activation of the password locking - even if not usually operational when switching to a sleep mode in the device. Though this additional security may often be tedious to the users, it may prove worthwhile in a number of situations in which the mobile device is left unattended (e.g. when it is kept together with common luggage or stored in an individual storage space in a public area).

The password activation or other authentication mechanisms described here may apply to any one or all of the "On", "Continuous Standby" and "Airplane" profiles or modes, when implemented. In some embodiments when implementing multiple sub-profiles as part of the geographic locking feature, the password locking or other authentication mechanism is automatically activated for the "Continuous Standby", "Airplane" and "Off" sub-profiles, but not for the "On" sub-profile.

Turning now to FIG. 4, a drawing of an exemplary display screen 400 used in a mobile device according to principles of the present disclosure is shown. Display screen 400 may be included as part of a larger user interface, such as user interface 240 described in FIG. 2. Display screen 400 may also be used in other mobile devices, such as mobile devices 130a-g described in FIG. 1.

Display screen 400 includes a quality level of signal reception icon 410, a geo-locking icon 420, a speakerphone icon 430, a remaining battery level icon 440, and a current time icon 450. The operation, use, and meaning of the quality level of signal reception icon 410, the speakerphone icon 430, the remaining battery level icon 440, and the current time icon 450 will not be described further here as their operation, use, and meaning are well known to those skilled in the art.

The geo-locking icon 420 is displayed for showing that the mobile device has the geographic locking feature activated or selected by a user (e.g., through user interface 300 described in FIG. 3). In case the geo-locking feature is not activated or selected by the user, the geo-locking icon 420 may not be shown at all on the display. Alternatively, the geo-locking icon may be present but displayed with a strike through, crossed X, or other method of displaying a not active status.

Display screen 400 also includes a window 460 for displaying a message and/or graphic element related to the geographic locking feature. In one embodiment, window 460 may include a message associated with initiation and/or operation of one or more security elements or measures and may be included to prevent unauthorized use or provide an unauthorized user with some information for returning the mobile device.

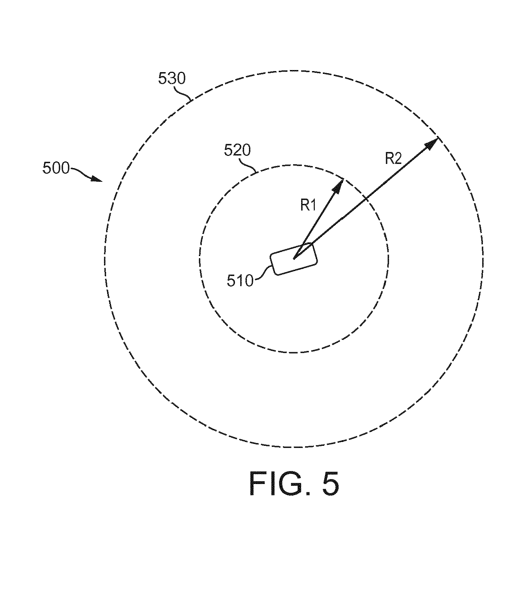

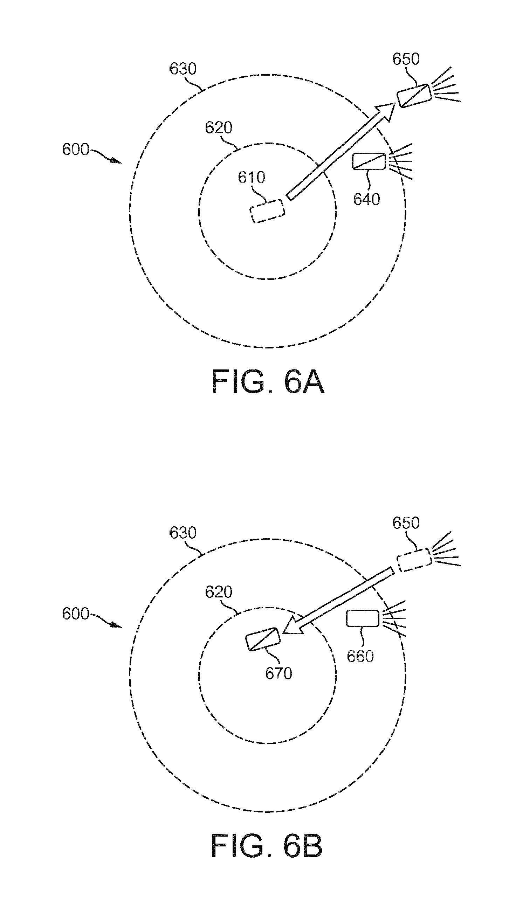

The various functions of the geographic locking feature of the present disclosure as described will be made apparent from the actions executed in case of movements of a mobile device as described with reference to FIGs. 5, 6A, and 6B below.

Turning now to FIG. 5, a diagram of an exemplary distance map 500 including characteristics associated with a current location for a mobile device according to principles of the present disclosure is shown. A mobile device (e.g., mobile device 200 described in FIG. 2 or one of mobile devices 130a-g described in FIG. 1) has an initial location 510. As part of the activation of the geographic locking feature (e.g., selection of geo-locking 360 described in FIG. 3), a first distance from the initial location 510 is determined as R1 and identified as a first circumferential distance 520. The first distance 520 is used as a threshold distance for triggering the security mechanism as part of activating the geographic locking feature in the mobile device.

In some embodiments, the geographic locking feature may also determine a second distance from initial location 520, R2, identifying a second circumferential distance 530. In these embodiments, the first distance 520 may be used as the first threshold distance for triggering a first level of security in conjunction with activating the geo-locking feature in the mobile device. The second distance 530 may be used as a second threshold distance for activating a second level of security. The second level of security may be in place of the first level of security or may be in addition to the first level of security.

The two concentric areas regions formed by distance 520 and distance 530 may be determined based on the initial position 510. Distances less than distance 520 may be referred to as a safety range. Distances greater than distance 520 but less than distance 530 may be referred to as a triggering distance. A location at a distance greater than distance 530 may be referred to as a threat distance.

The distances 520 and 530 may be preset parameters, available for use by a control element and storage in a storage element in a mobile device (e.g., control unit 210 and storage unit 230 described in FIG. 2). The preset parameters may be determined as factory presets. In some embodiments, one or more of the distances 520 and 530 may also be set by a user through a user interface (e.g., user interface 240 described in FIG. 2). For example, three different sets of distance values for distances 520 and 530 may be made available to, and selectable by, the user. The three sets may include a first set being relatively close to the initial position (e.g., between 2 meters and 5 meters), a second set being at a middle distance (e.g., between 3 meters and 6 meters), and a third set being relatively remote (e.g., between 5 meters and 10 meters) from the initial position.

In an alternative embodiment, which can also be included with the previously described embodiment in the same device, the user is able to adjust the triggering and safety distances, within some reasonable available ranges. It may also be appropriate in some circumstances to adopt values for distances 520 and 530 having a higher ratio, for example respectively 2 and 20 meters. The criteria for such choices will become clearer to the reader with the explanations below.

A display may also be used in conjunction with the user interface described above in order to make the user aware of the effective distances. Indeed, this can offer useful information for security management of the remote display.

Turning now to FIGs. 6A and 6B, two diagrams of a distance map 600 including operational mechanisms based on movement of a mobile device according to principles of the present disclosure are shown. Distance map includes initial location 610 as well first distance 620 and second distance 630 in a manner similar to that shown in FIG. 5. In FIG. 6A, a mobile device (e.g., mobile device 200 described in FIG. 2 or one of mobile devices 130a-g described in FIG. 1) is moved away in some direction at an increasing distance from initial location 610 (e.g., as a result of a theft or other unauthorized relocation of the mobile device).

At some point in time during moving away from initial location 610, the location of the mobile device exceeds the first distance threshold 620 and enters into a first security region of operation 640. In some embodiments, the first security region of operation 640 may not change the operation of the mobile device. In other embodiments, the first security region of operation 640 triggers a first action in the mobile device. The operation of the mobile device remains as operating as described for any of the embodiments herein while in the first security region of operation 640 spanned by the first distance threshold 620 and second distance threshold 630.

At a further point in time during moving away from initial location 610, the location of the mobile device exceeds the second distance threshold 630 and enters a second security region of operation 650. In some embodiments, the second security region of operation 650 (instead of the first security region of operation 640) triggers a first action in the mobile device. In other embodiments, the second security region of operation 650 triggers a second security action in the mobile device. The second security action may typically include a higher level or severity or be more operationally severe with respect to the first security action. The operation of the mobile device remains as operating as described for any of the embodiments herein while in the second security region of operation 650 located at a distance beyond second distance threshold 630.

In FIG. 6B, the mobile device, starting at a location with a distance greater than the second distance threshold 630, moves toward and in the general direction at a decreasing distance to initial location 610 (e.g., as a result of an attempt to return the device to its rightful owner).

At some point in time during moving towards initial location 610, the location of the mobile device no longer exceeds the second distance threshold 630 and triggers a third security region of operation 660. In some embodiments, the third security region of operation 660 untriggers or deactivates the second security threshold mode while maintaining the activation of the first security threshold mode. In some embodiments, the entry into third security region of operation 660 may not change the operation of the mobile device. In other embodiments, the entry into the third security region of operation 660 returns the mobile device to operation as a result of the first action in the mobile device. The new operation of the mobile device remains as operating as described for any of the embodiments herein while in the third security region of operation 360 spanned by the region between first distance threshold 610 and second distance threshold 620.

At a further point in time during moving towards initial location 610, the location of the mobile device no longer exceeds the first distance threshold 620 and enters a fourth security region of operation 670. In some embodiments, the fourth security region of operation 670 untriggers or deactivates the first security threshold mode. Moving to a location with a distance less than the first distance threshold 620 removes some or all of the security measures in the mobile device and returns the mobile device to normal operation.

In a variant embodiment, the password locking or other authentication mechanism may not be automatically activated with the activation of the geographic locking feature (e.g., selection of Geo-Locking profile 360 in FIG. 3). Instead, password locking or authentication may be triggered as soon as the mobile device is moved beyond the first distance threshold 620. The password locking or authentication at first distance threshold 620 prevents an unauthorized user from possibly exploiting the distance between the first and second distance thresholds 620 and 630 for deactivating the geographic locking mechanism, assuming any kind of awareness of such a threat of theft or unauthorized use.

As can be easily understood, the representations in Figs. 5, 6A and 6B are based on the existence of a flat surface area, whether steep or not. In this respect, the above description is based on two dimensions. It is important to note that the description and operation applies equally as well in case of hilly, mountainous, or uneven environments. In fact, the distances (e.g., distances 520, 530 and distances 620, 630) may be determined in an absolute way in three dimensions with respect to the initial position (e.g., 510 and 610), constituting the reference point, whatever the followed path. Specific details regarding the determination of distances or locations are dependent upon the type and capabilities of the acceleration or distance sensing unit in the mobile device (e.g., sensor 280 described in FIG. 2).

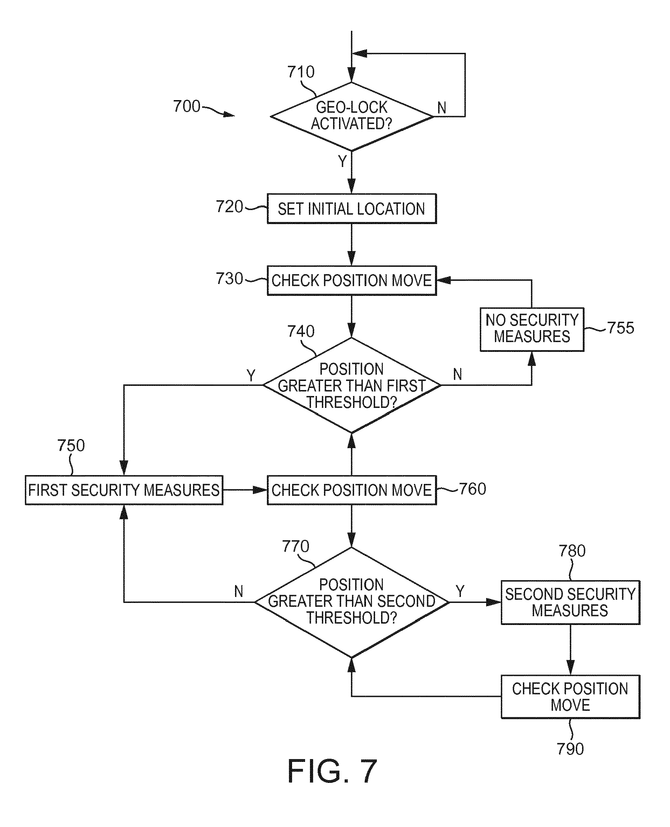

Turning to FIG. 7, a flow chart of an exemplary process 700 for providing a security mechanism for a mobile device according to principles of the present disclosure is shown. Process 700 will primarily be described in conjunction with mobile device 200 described in FIG. 2. Process 700 may also equally be described in conjunction with devices 130a-g described in FIG. 1. Certain aspects of process 700 will also be described in conjunction with user interface 300 described in FIG. 3. Further, certain aspects of process 700 will be described with reference to diagram 600 described in FIG.s 6A and 6B.

Process 700 implements one or more security measures based on movement of a mobile device from an initial location. When the movement away from the initial location exceeds a first threshold distance (e.g., distance 620), referred to as a trigger threshold, a first set of security measures are initiated. The first set of security measures may be initiated as part of a first alternate operating condition for the mobile device. In some cases, if the movement away from the initial location further exceeds a second threshold distance (e.g., distance 630), referred to as a threat threshold, a second set of security measures are initiated. The second set of security measures may be initiated as part of a second alternate operating condition for the mobile device.

In the case that movement returns the mobile device towards the initial location such that the position no longer exceeds the second threshold distance, the second set of security measures are terminated. When movement returns the mobile device towards the initial location such that the position no longer exceeds the first threshold distance, now referred to a safety threshold, the first set of security measures are terminated.

At step 710, a determination is made as to whether geographic locking is selected. The selection, at step 710, may be made by selecting Geo-Locking 360 in user interface 300. If selection is not made, process 700 returns to step 710 and waits for another determination. If the selection is made, then, at step 720, an initial position for the mobile device is set. The position may be identified as location 610 as in FIG. 600. This initial position 610, at step 720, will be considered as a reference for establishing the security perimeters around and for considering the mobile device movements. Accordingly, control unit 210 may set the current position as the initial position, at a reference distance or zero value and stores corresponding information in the storage unit 230.

At step 730, the movement of the mobile device is monitored or checked. The movement, at step 730, is analyzed and calculated by the control unit 210 or processor 250 in conjunction with the monitoring by the sensor 280. The monitoring, at step 730, determines the current position of the mobile device with a reasonably low error margin, precise enough for executing the steps of process 700 compliant with the principles of the present disclosure. In particular, though purely linear movements at constant speeds may not induce any acceleration, the actual movement of the mobile device, especially when accompanied by living beings, will always cause some significant acceleration, positive or negative. Further, depending on the type of sensor used (e.g., intertial sensor, accelerometer, gyroscopic sensor), the accelerations may be available along up to three perpendicular axes. The acceleration permits calculations (e.g., by control unit 210) of the speed of the accompanying movement and finally the position, or location relative to an initial location, of the mobile device using successive integration operation steps. Still further, depending on the type of acceleration sensor used, directional information related to the acceleration, and therefore speed as well as location and distance may be determined. As a result, the determination of positions, distance, and possibly directions will be sufficiently reliable at the expense of only a limited amount of processing and storing capabilities.

In one embodiment, at step 730, the current position of the mobile device may be determined and kept in the storage unit 230 along with the initial position (e.g., 610) at any time. Further, the control unit 210 is able to keep track of a set of fixed global reference directions, typically relying on three perpendicular axes, in order to form a reference orthogonal spatial system. The current position is determined based on a continuous analysis of movements starting from the initial position, with respect to local directional movement associated with the mobile device and values available and received from the axes x, y, z of the sensor 280 in conjunction with the reference spatial system.

It is important to note that the intermediary computation outputs or positions do not need to be kept in storage (e.g., storage unit 230). Namely, at each moment, the important required data is the initial and current positions of the mobile device, together with the orientation of the reference orthogonal spatial system with respect to the three local axes associated with the sensor 280.

It should also be noted that, further to the initial and current positions for the mobile device, only the position of two additional points would be sufficient for deriving the reference orthogonal spatial system from the local directions given by the sensor 280. Each of the additional points provides one of the global reference directions with the third reference direction being derived from the two others. However, in practical computations, it proves desirable to get redundant data so as to ensure a higher level of accuracy and an enhanced stability of information over time.

Additionally, since computational errors may progressively accumulate with significant movements associated with the mobile device, it is preferable for the user to reinitiate the geographic locking feature (e.g., using process 700) if the mobile device has been moved significantly over a period of time with respect to its initial position (e.g., position 610).

As a result of determining the current position, at step 730, a determination is made, at step 740, as to whether the current position has exceeded a first threshold. The first threshold may be identified as first threshold distance 620. The determination, at step 740, is processed in control unit 210 using a distance value computed from the initial position and current position, stored in storage unit 230, and the parameter value for threshold distance 620, also stored in storage unit 230. If, at step 740, it is determined that the current position has not exceeded the first threshold, then process 700 returns to step 730 through step 755, described below, to continue monitoring movement and determining a current position for the mobile device. If, at step 740, it is determined that the current position has exceeded the first threshold, then, at step 750, a first set of security actions are initiated or executed. The first set of security measures may include, but are not limited to triggering the password locking or authentication, if not already operational, and/or a sound warning signal, audible to the neighborhood in a similar way as an alert warning for an automobile.

In one embodiment, a special message is displayed on a display screen on the mobile device (e.g., window 460 described in FIG. 4). The display message may, for instance, read "Please bring me back there", together with an arrow pointing to the initial position 610 of the mobile device. The indication is not difficult to generate because the initial position and the current position of the mobile device are available in the storage unit 230 along with information associated with the reference orthogonal spatial system. This embodiment not only provides security measures but further provides the ability for the mobile device to be returned in the situation that the mobile device was accidentally misplaced or relocated instead of stolen. Further, if/when the alarm signal sounds, the mobile device may be dropped by a thief and somebody else may find it and return it. In both cases, having an indication of where to return the mobile device may be helpful.

After the first security measures, at step 750, are initiated, the movement of the mobile device continues to be monitored, at step 760. The monitoring of movement and subsequent calculation of position and distance from the initial location, at step 760, is performed in the same manner as in step 730. The monitoring step 760 returns to step 740 to determine if the position is still greater than the first threshold. If, at step 740, it is determined that the distance still exceeds the threshold, the first security measures remain in place, at step 750 and process 700 continues. If it is determined, at step 740, that the distance no longer exceeds the threshold, then, the first security measures are removed, at step 755, and the mobile device is considered to be within the safe distance. The removal of the first security measures may include stopping the sound warning signal. However, the password locking or authentication is preferably kept even then, for sake of minimal residual security provision. Further, if implemented, the message displayed on screen for providing information regarding bringing back the mobile device is also advantageously maintained. The mobile device may still not be returned to the initial location, even though returned to the safe distance. Process 700 continues further at step 730 with checking any additional movement of the mobile device. If the mobile device is actually returned to its owner, then, as mentioned above, it is recommended that the owner reinitiate the geographic locking feature.

As a further measure in some embodiments, after the checking of movement of the mobile device, step 760, a determination is made, at step 770, as to whether the current position has exceeded a second threshold. The second threshold may be identified as second threshold distance 630. The determination, at step 770, is processed in control unit 210 using a distance value computed from the initial position and current position, stored in storage unit 230, and the parameter value for threshold distance 630, also stored in storage unit 230. If, at step 770, it is determined that the current position has not exceeded the second threshold, then process 700 returns to step 750, maintaining the first security measures, and further to step 760 to continue monitoring movement and determining a current position for the mobile device. If, at step 770, it is determined that the current position has exceeded the second threshold, then, at step 780, a second set of security actions are initiated or executed. The second set of security measures are more harsh regarding the operations of the mobile device and preventing any highly prejudicial acts, through more stringent or more operational disabling provisions. Typically, the second security measures may include, but are not limited to, automatically deleting internal data and/or sending an alert signal to a central server. The internal data that is deleted may include, but is not limited to, contact names and phone numbers, bank account information, personal address information and social security numbers, and other account passwords. Such provisions are known by persons skilled in the art and will not be detailed here.

After the second security measures are initiated, at step 780, the movement of the mobile device continues to be monitored, at step 790. The monitoring of movement and subsequent calculation of position and distance from the initial location, at step 790, is also performed in the same manner as in step 730. The monitoring step 790 returns to step 770 to determine if the position is still greater than the second threshold. If, at step 770, it is determined that the distance still exceeds the threshold, the second security measures remain in place, at step 780 and process 700 continues. If it is determined, at step 770, that the distance no longer exceeds the second threshold, then, the second security measures are removed and replaced with the first security measures, at step 750, and the mobile device is considered to be within the trigger distance. It is important to note that any deleted information may not be restored. Process 700 continues further at step 760 with checking any additional movement of the mobile device.

Steps 770 to 790 may be advantageous for potentially rapid movement of the mobile device, such as a thief running away or still more likely driving away. The second security measures triggered at a second threshold distance limits any chance of defeating the security measures while in possession of the thief.

Further, as part of process 700, the mobile device owner may at any moment deactivate the geographic locking feature insofar as the device is available to him/her by, for instance, de-selecting the button or entry associated with Geo-Locking entry 360.

Process 700, as described may, in some embodiments, involve one threshold distance, the triggering distance, or may further involve a second threshold distance, the threat distance. While the use of only one threshold may work satisfactorily for implementing security measures in a mobile device anti-theft system, the use of two threshold distances may offer a number of additional benefits. In particular, relying on two distances enables may exert an additional incentive for bringing back the mobile device either to the original location, or close to the original location, while at the same time avoiding excessive sensitivity to a limited amount of movement. In addition, the two threshold system may provide a balance between security and protection and unnecessary disruption and inconvenience to the mobile device owner as a result of any unintended triggering of the security mechanisms when not fully justified.

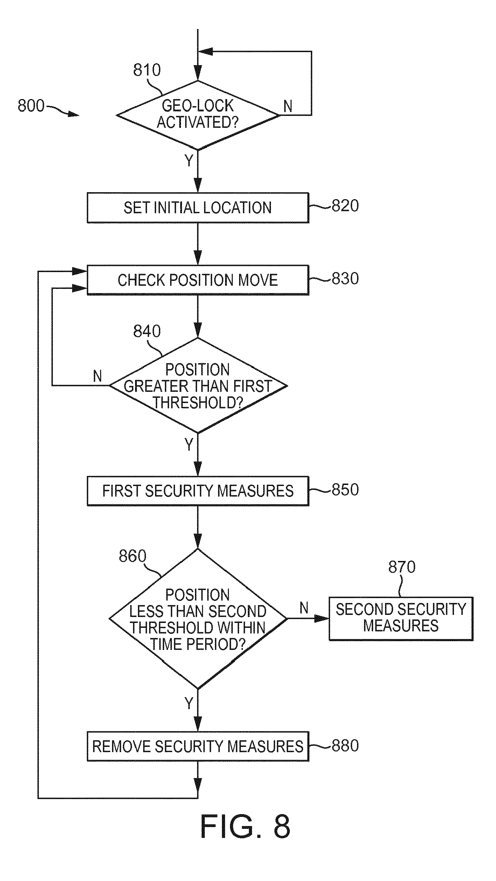

Turning to FIG. 8, a flow chart of an exemplary process 800 for providing a security mechanism for a mobile device according to principles of the present disclosure is shown. Process 800 will primarily be described in conjunction with mobile device 200 described in FIG. 2. Process 800 may also equally be described in conjunction with devices 130a-g described in FIG. 1. Certain aspects of process 800 will also be described in conjunction with user interface 300 described in FIG. 3. Further, certain aspects of process 800 will be described with reference to diagram 600 described in FIG.s 6A and 6B. Additionally, certain aspects of process 800 are similar to process steps described in process 700 and, except where necessary, will not be further described here.

Process 800 implements one or more security measures based on movement of a mobile device from an initial location. When the movement away from the initial location exceeds a first threshold distance (e.g., distance 630), referred to as a trigger threshold, a first set of security measures are initiated. The first set of security measures may be initiated as part of a first alternate operating condition for the mobile device. A timer mechanism is started as part of the first security measures. If the mobile device is not returned to a location that does not exceed a second threshold (e.g., distance 620), referred to as a safety distance, within a specified time based on the timer mechanism, then a second set of security measures are initiated. The second set of security measures may be initiated as part of a second alternate operating condition for the mobile device. If the device is returned to a location within the safety distance and within the specified time period, then the first security measures may be terminated.

At step 810, a determination is made as to whether geographic locking is selected. The selection, at step 810, may be made by selecting Geo-Locking 360 in user interface 300. If selection is not made, process 800 returns to step 810 and waits for another determination. If the selection is made, then, at step 820, an initial position for the mobile device is set. The position may be determined in a manner described above in process 700.

At step 830, the movement of the mobile device is monitored or checked. The movement, at step 830 may be determined as described above in process 700. Additionally, or alternatively, the movement, at step 830, may be determined in processor 250 using information received from one or more GPS signals received by the mobile device (e.g., through antenna 270 and RF unit 260). More particularly, the information from the one or more GPS signals provides location information for the mobile device directly. It is important to note that other internal or external methods of determining movement or location of the mobile device may be used at step 830.

Also, as in process 700, it is preferable for the user to reinitiate the geographic locking feature (e.g., using process 800) if the mobile device has been moved significantly over a period of time with respect to its initial position (e.g., position 610).

As a result of determining the current position, at step 830, a determination is made, at step 840, as to whether the current position has exceeded a first threshold. The first threshold may be identified as threshold distance 630 in FIG. 6. It is important to note that in determining whether the current position has exceeded the threshold distance 630, at step 830, the position of the mobile device would have already exceeded the threshold distance 620. The determination, at step 840, is processed in control unit 210 using a distance value computed from the initial position and current position, stored in storage unit 230, and the parameter value for threshold distance 630, also stored in storage unit 230. The determination, at step 840, may also create and utilize the reference orthogonal spatial system similar to that described in process 700.

If, at step 840, it is determined that the current position has not exceeded the first threshold, then process 800 returns to step 830 to continue monitoring movement and determining a current position for the mobile device. If, at step 840, it is determined that the current position has exceeded the first threshold, then, at step 850, a first set of security actions are initiated or executed. The first set of security measures may include, but are not limited to triggering the password locking or authentication, if not already operational, and/or a sound warning signal, audible to the neighborhood in a similar way as an alert warning for an automobile. As described in process 700, some embodiments may also include displaying a special message on a user interface display of the mobile device to encourage and provide guidance for returning the mobile device.

The initiation of the first set of security measures, at step 850, may also include the starting of a countdown timer using clock unit 220 in conjunction with control unit 210. The countdown timer is used to determine a security time duration during which the mobile device may be returned within a safe distance from the original location before additional security measures may be taken. Details related to what happens with the security time duration and the additional security measures will be discussed in further detail below.

The threshold value for the security time duration may be stored in storage unit 230. The threshold value may include a default duration threshold value determined by design or at time of manufacture. In one embodiment, a default duration threshold value is 10 minutes, however other values, longer or shorter in time, are possible and may depend on threshold distances used (e.g., threshold distances 620 and 630). In some embodiments, the threshold may be user adjustable (e.g., selected as a menu entry among a limited number of possibilities).

It is important to note that the security time duration should be short enough to avoid or prevent fraudulent actions taken with the mobile device keeping in mind that the password lock or authentication (e.g., biometric) mechanism is operational and the warning is sounding as part of the first security measures. However, the chosen threshold value should be appropriately long enough to avoid unnecessary or undesired triggering and to permit the return of the mobile device given the distance that would need to be covered to return it.

Also, at step 850, the movement of the mobile device continues to be monitored, similar to the monitoring at step 830. At step 860, a determination is made, as to whether the current position is now less than a second threshold. The second threshold may be identified as first threshold distance 620. It is important to note that in determining whether the current position is now less than the threshold distance 620, at step 860, the position of the mobile device would have also been returned to a position that is less than the threshold distance 630. The determination, at step 860, is processed in control unit 210 using a distance value computed from the initial position and current position, stored in storage unit 230, and the parameter value for threshold distance 620, also stored in storage unit 230.

If, at step 860, it is determined that the current position is not less than the second threshold value, then, at step 870, a second set of security actions are initiated or executed. The second set of security measures are harsher or more severe with respect to the operations of the mobile device and are intended to prevent any highly prejudicial acts through more stringent provisions. Typically, the second security measures may include, but are not limited to, automatically deleting internal data and/or sending an alert signal to a central server. The second security measures are intended to be more disabling or more operationally restrictive to the mobile device Such provisions are known by persons skilled in the art and will not be detailed here.

A further possible security measure that may be taken, at step 870, involves remotely transmitting navigation signals from the mobile device based on the reception of the GPS location signals. This security measure may provide an indication to the owner and to authorities indicating the current location of the mobile device in order to assist in recovery. The remote transmission of navigation security measure may require use of or selection of a particular geographic locking profile

(e.g., the "Airplane" profile or mode) that advantageously maintains operation of GPS reception while having other radio reception functionalities switched off.

If, at step 860, it is determined that the current position is less than the second threshold value, then, at step 880, some or all of the security actions are relieved or terminated. The termination, at step 880 may include stopping the sound warning signal and the timer countdown. However, as in process 700 the password locking or authentication may preferably remain operational. Also, as in process 700, any message displayed on the mobile device is maintained.

In addition to determining whether the current position is less than the second threshold, the determination, step 860 may also include determining whether the threshold value for the security countdown timer has been exceeded. As a result, process 800 will move to the termination of securities measures at step 880 only if the current position is less than the second threshold and before the security countdown timer has reached the threshold value. Process 800 will move to initiating the second set of security measures, at step 870, if the current position is not less than the second threshold and the countdown timer has reached the threshold value.

Following the termination, at step 880, process 800 returns and further checks the position of the mobile device, at step 830. Additionally, as mentioned above, it may be desirable for the owner to reinitiate the geographic locking feature.

In some embodiments, if, at step 850, the mobile device is identified as still or no longer moving, the countdown timer used as part of the set of first security measures may be suspended while the mobile device remains still. Such a condition is desirable because a thief may have dropped the mobile device due to the sounding of the warning signal or the mobile device may have merely been mistakenly displaced.

In another embodiment, the countdown timer is suspended if the mobile device has reached back a current position less than the first threshold but more than the second threshold. This reduces the risks of causing heavy consequences though the situation is being returning to normal.

In some embodiments, instead of using the countdown timer as part of the first set of security measures, process 800 may be modified to include determining if a third distance from the initial position (e.g., 510, 610) has been exceeded. The third distance threshold may be referred to as the hardening distance and is larger than the triggering distance 530. In these embodiments, the second set of security measures are initiated if the position of the mobile device exceeds the third distance.

The use of a third distance threshold can be advantageous for avoiding potentially prejudicial steps being triggered just because the mobile device is being displaced in a wrong place (e.g., a distance less than the third distance threshold), without necessarily involving a dishonest behavior. However, it should be noted that if a thief is moving fast, whether running or still more likely driving a two-wheels, such as a motorbike, this third circle, not shown, may be reached very promptly, without leaving any chance to avoid the triggering of the second level of security actions by defeating the theft before then. Also, this solution increases the risks of spurious triggering, notably in the event of improper operation by the user in a traveling car or train.

As in process 700 the owner may always deactivate the geographic locking feature at any point in process 800 if he/she has access to the mobile device.

Process 800 utilizes two threshold distances, one triggering distance and one safety distance. In particular, relying on two distances enables to exert an additional pressure for bringing back the mobile device close to the right place, while at the same time avoiding excessive sensitivity to limited movement. In addition, the use of two distances prevents a thief discretely and slowly leaving with a stolen mobile device from playing with the set limits, since bringing back the mobile device to within the first threshold distance causing the triggering of the sound warning is not sufficient for halting it. Also, the use of two distances in conjunction with, or instead of a security timer may provide a balance between security and protection and unnecessary disruption and inconvenience to the mobile device owner as a result of any unintended triggering of the security mechanisms when not fully justified.

The present disclosure offers a simple, safe, and efficient anti-theft solution for mobile phones, without requiring tedious or complex user actions. The present disclosure may be further be implemented at a low initial cost and may rely on software upgrading using a device readable medium, locally or remotely, in devices already including acceleration or gyroscopic sensing units (e.g., sensor 280).

Although embodiments which incorporate the teachings of the present disclosure have been shown and described in detail herein, those skilled in the art can readily devise many other varied embodiments that still incorporate these teachings. Having described preferred embodiments of an apparatus and method for providing a security mechanism on a mobile device (which are intended to be illustrative and not limiting), it is noted that modifications and variations can be made by persons skilled in the art in light of the above teachings. It is therefore to be understood that changes may be made in the particular embodiments of the disclosure disclosed which are within the scope of the disclosure as outlined by the appended claims.

## Claims

1. A method (700) **characterized in that** the method comprises:
determining (730) a distance from an initial location for a device, the distance from the initial location determined using a sensor included in the device;
determining (740) if the distance from the initial location for the device exceeds a first threshold value for the distance; and
initiating (750) a first alternate operating condition for the device if it is determined that the first threshold value for the distance has been exceeded, the first alternate operating condition including at least one security measure used to prevent unauthorized use of the device.

2. The method (700) of claim 1, wherein the sensor is an accelerometer.

3. The method (700) of claim 1 or claim 2, wherein the at least one security measure included in the first alternate operating condition includes at least one of sounding an audible alarm on the device and displaying a message on a display screen on the device.

4. The method (700) of claim 3, wherein the message displayed on a display screen includes an indication of direction towards the initial location.

5. The method (700) of claim 3 or claim 4, wherein the first alternate operating condition also includes requiring authentication by an owner of the device in order to return the device to a normal operating condition from the first alternate operating condition.

6. The method (700) of any of claims 3-5, wherein if it is determined that the distance from the initial location no longer exceeds the first threshold value at a point in time after it is determined that the device has exceeded the first threshold value, then the security measures included in the first alternate operating condition are terminated but the device remains in the first alternate operating condition.

7. The method (700) of any of claims 1-6, further comprising setting (720) the first alternate operating condition with the device located at the initial location.

8. The method (700) of claim 7, wherein setting (720) the first alternate operating condition includes establishing the first threshold value for the distance.

9. The method (700) of any of claims 1-8, further comprising:
determining (770) if the distance from the initial location for the device exceeds a second threshold value for the distance at a point in time after it is determined that the distance from the initial location for the device has exceeded the first threshold value for the distance, the second threshold value being greater than the first threshold value; and
initiating (780) a second alternate operating condition for the device if it is determined that the second threshold value for the distance has been exceeded, the second alternate operating condition including at least one security measure that is more severe than the at least one security measure associated with the first alternate operating condition.

10. The method of claim 9, wherein the at least one security measure included in the second alternate operating condition includes at least one of automatically deleting data stored on the device and sending out an alert signal to a remote server.

11. The method of any of claims 1-10, wherein the device is a cell phone.

12. An apparatus implementing any of the method claims 1 - 11.

13. A device readable storage medium containing program instructions for causing a device to perform any of the method claims 1 - 11.

14. An apparatus (200) **characterized in that** the apparatus comprises:
a sensor (280) that determines a distance from an initial location for the apparatus; and
a controller (210) that receives the distance from the sensor (280) and determines if the distance from the initial location for the apparatus exceeds a first threshold value for the distance, the controller (210) further initiating a first alternate operating condition for the apparatus if it is determined that the first threshold value for the distance has been exceeded, the first alternate operating condition including at least one security measure used to prevent unauthorized use of the apparatus.

15. The apparatus (200) of claim 14, wherein the controller (200) further determines if the distance from the initial location for the apparatus exceeds a second threshold value for the distance at a point in time after it is determined that the distance from the initial location for the apparatus has exceeded the first threshold value for the distance and generates a second alternate operating condition for the apparatus if it is determined that the second threshold value for the distance has been exceeded, the second alternate operating condition including at least one security measure that is more severe than the at least one security measure associated with the first alternate operating condition.
